# EUROPEAN PATENT SPECIFICATION

(11) **EP 2 926 502 B1**
(45) Date of publication and mention of the grant of the patent: **29.06.2016**
(21) Application number: 13803369.1
(22) Date of filing: 22.11.2013
(51) Int. Cl.: H04L 12/28, H04M 1/27

(54) **VOICE-CONTROLLED CONFIGURATION OF AN AUTOMATION SYSTEM**
SPRACHGESTEUERTE KONFIGURATION EINES AUTOMATIONSSYSTEMS
CONFIGURATION PAR COMMANDE VOCALE D'UN SYSTÈME D'AUTOMATISATION

(30) Priority: 03.12.2012 US 201213692489
(43) Date of publication of application: 07.10.2015
(73) Proprietor: Qualcomm Incorporated, San Diego, CA 92121-1714 (US)
(72) Inventor: BOYD, John D., San Diego, California 92121-1714 (US); CARY, James B., San Diego, California 92121-1714 (US); WENGER, Geoffrey C., San Diego, California 92121-1714 (US)
(74) Representative: Carstens, Dirk Wilhelm
(86) International application number: PCT/US2013/071445
(87) International publication number: WO 2014/088845

(56) References cited:
- WO-A1-2009/049325
- US-A1- 2005 096 753
- US-A1- 2012 109 384

## Description

### FIELD

Aspects of the present disclosure relate generally to methods and apparatus for automatic control, and more particularly to voice-controlled configuration of an automation system for a home or other space.

### BACKGROUND

Automation systems are known for controlling the environment of homes, offices, or other personal spaces. Such systems may include a central controller in communication with peripheral electronic devices throughout the home or other space, through a wired and/or wireless interface. Peripheral electronic devices may include, for example, "smart" home appliances, including "smart" power controllers configured for controlling electrical power supplied to "dumb" appliances such as electric lamps, ventilation fan, space heaters, or any other desired appliance. Advantages of such systems may include the ability of the user to control appliances throughout the home or other space from one control node. The control node may have a wide-area network or other interface for remote access enabling an authorized user to control appliances throughout the home or other space remotely. Thus, an absentee owner may control operation of electrical appliances for lighting, temperature control, food preparation, audio output, security, or other function through a single control node, which can be managed from a remote location if desired. The automation system may also make it more convenient to control appliances while the user is present, by providing a central control point, see for example US 2005/0096 753.

Notwithstanding the advantages of such automation systems, they may be difficult for the ordinary untrained consumer to set up and maintain. Consumers may hire an expert technician to set up an automation system, but this may increase initial costs and make the consumer dependent on the expert for making subsequent configuration changes, such as adding and configuring new appliances. It would be desirable to provide the user with methods and apparatus for configuring an automation system that overcomes these and other limitations of prior automation systems.

### SUMMARY

Methods, apparatus and systems voice-controlled configuration of an automation system for a home or other space are described in detail in the detailed description, and certain aspects are summarized below. This summary and the following detailed description should be interpreted as complementary parts of an integrated disclosure, which parts may include redundant subject matter and/or supplemental subject matter. An omission in either section does not indicate priority or relative importance of any element described in the integrated application. Differences between the sections may include supplemental disclosures of alternative embodiments, additional details, or alternative descriptions of identical embodiments using different terminology, as should be apparent from the respective disclosures.

In an aspect, the application discloses a method according to the independent claims 1 and 9 and an apparatus according to the independant claims 8 and 15.

The method may further include receiving audio input from a user converted by an electroacoustic transducer into an audio signal. The method may further include determining control settings controlling the capabilities of the appliance, based on the audio signal. In a further aspect, the method may include controlling the capabilities of the appliance, based on the control settings.

In another aspect, the method may include generating a network identifier for the at least one appliance, based on the audio signal. The method may also include recognizing a voice pattern of the user based on the audio signal, and authenticating the user at least in part based on the voice pattern.

In coordination with a component of a home automation system, a client device may perform another method for voice-controlled configuration of an automation system for a home or other space. The method may include advertising an appliance to a controller of an automation system via a computer network. The method may include transmitting a signal to the controller indicating capabilities of the appliance. Transmitting the signal to the controller indicating capabilities of the appliance may include at least one of providing a pointer to a record of a remote database comprising the information, or providing the information directly from the appliance via the network. The method may further include converting audio input from a user into an audio signal, using an electroacoustic transducer. Converting the audio input may be performed using a mobile entity operating a user interface application. In the alternative, the converting may be performed using a transducer component of the appliance itself. The method may include transmitting control settings for the appliance encoded in the audio signal to the controller. In another aspect, the method may include transmitting a network identifier for the appliance encoded in the audio signal.

In related aspects, a control apparatus may be provided for performing any of the methods and aspects of the methods summarized above. An apparatus may include, for example, a processor coupled to a memory, wherein the memory holds instructions for execution by the processor to cause the apparatus to perform operations as described above. Certain aspects of such apparatus (e.g., hardware aspects) may be exemplified by equipment such as a computer server, system controller, control point or mobile computing device. Similarly, an article of manufacture may be provided, including a computer-readable storage medium holding encoded instructions, which when executed by a processor, cause a computer to perform the methods and aspects of the methods as summarized above.

### BRIEF DESCRIPTION OF THE DRAWINGS

FIG. 1 is a block diagram conceptually illustrating an example of an automation system including elements for voice-controlled configuration.
FIG. 2 is a sequence diagram illustrating a use case of an automation system including elements for voice-controlled configuration.
FIG. 3 is a block diagram conceptually illustrating an example of an automation system including elements for voice-controlled configuration, according to an alternative embodiment.
FIG. 4 is a sequence diagram illustrating a use case of an automation system including elements for voice-controlled configuration, according to the embodiment of FIG. 3.
FIGS. 5-8 illustrate embodiments of a methodology for voice-controlled configuration of an automation system, using a network entity.
FIG. 9 illustrates an example of an apparatus for implementing the methodologies of FIGS. 5-8.
FIGS. 10-12 illustrate embodiments of a methodology for voice-controlled configuration of an automation system at a client device.
FIG. 13 illustrates an example of an apparatus for implementing the methodologies of FIGS. 10-12.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

Voice control is becoming popular in home automation systems and may become a standard feature that users expect. The present disclosure concerns methods and apparatus for leveraging voice control to make the process of adding new control points to a home automation system easier for the consumer. Instead of being required to update an automation database via a graphical user interface, users can, if they choose, use voice commands to configure new control points as they are added to an existing automation system. This audio-driven configuration process may be used to inform the system how the user wishes to address (name) the added component in the system, and can also be used for user authentication.

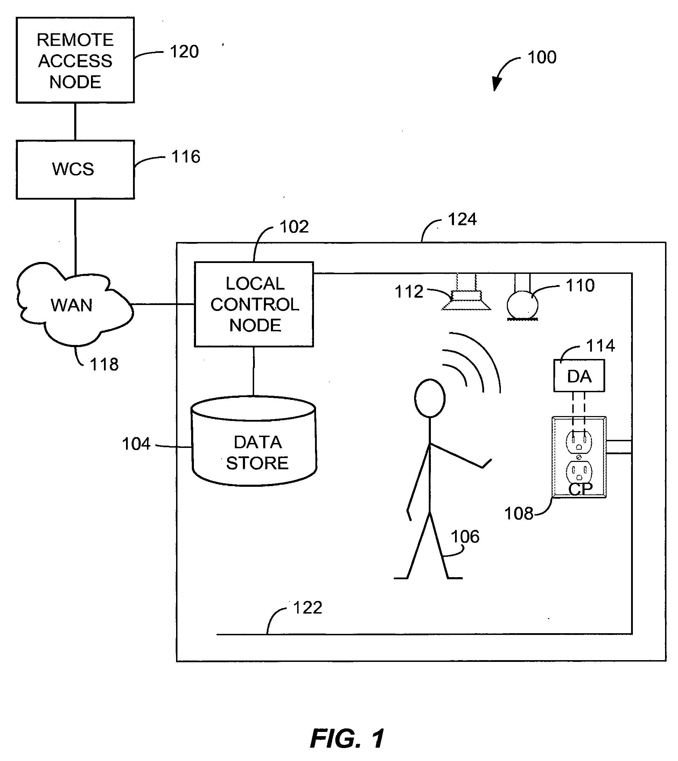

Referring to Fig. 1, an automation system 100 using a centralized system controller (also referred to a local control node) 102 is shown. The system 100 may include a wired, wireless, or combination wireless/wired network 122 of control points 108 (one of many shown) installed in a space 124, for example, a home, office or factory. The network 122 may use WiFi, power line communications, Ethernet, or some combination of these or other local network technologies. One or more electroacoustic transducers 110, for example microphones, may be connected with the network 122 and in communication with the controller 102. For example, microphones may be mounted in each room of a home automation system during initial installation of the system. In addition, an output transducer 112, such as an audio speaker, may also be coupled to the network 122 and controller 102.

The local control node 102 may be coupled to a data store 104, for example a database holding configuration and control information for the network 122, among other things. The configuration information may include, for example, a description of each control point 108 connected to the network 122 including if applicable a description of a dumb appliance 114 (such as a lamp or the like) having its power or other inputs controlled by the processor-controlled "smart" control point 108. In the alternative, the control point 108 may be a smart appliance such as, for example, a microprocessor controlled video camera with a built in network interface. Configuration information in the data store 104 may further include addressing information for communicating with the control point 108 over the network 122, and control settings such as specified by voice command or other user input concerning when and how various control capabilities of the control point 108 are to be used. For example, the control settings may define one or more times at which the control point 108 is to power the appliance 114 on or off.

When a new control point is to be added to the system 100, or when performing an initial setup operation, the controller 102 should be made aware of the new control point 108 and receive authenticated authorization from the user to permit the installation. The controller 102 should also be made aware of and record a reference name that the user will use to identify and control the control point in the automation system 100. The controller may also learn and record one or more voice commands that the user may wish to define for the specific purpose of controlling operation of the control point.

For example, a user 106 may add a switched wall outlet control point 108 to the system 100. The wall outlet 108 may be configured to communicate with the controller 102 using a power line or wireless protocol. The control point 108 may be configured to permit a device to be controlled (e.g., powered on/off) to be plugged into a standard electrical power socket. The control point 108 may be added by plugging it into a passive electrical outlet. The act of powering up the control point 108, or another event such as the user activating a button or switch on the control point, causes the control point to advertise its presence in the system 100 to the controller 102, for example using a discovery protocol such as Bonjour or WiFi Direct. As part of the discovery process, the control point 108 may transmit information about its capabilities to the controller 102, which may store the information in the data store 104. Such capabilities may include, for example, a human-spoken name, on/off scheduling, dimming percentage, or other control settings specific to the control point 108. The controller may thus be made aware of the new control point 108 and the type of control settings it can support. However, the controller 102 may still need user input to define user-selected values for the control settings, for example a specific schedule for turning the power on or off.

During or after the discovery process the controller 102 may cause the speaker 112 to output electronic speech informing the user about the capabilities of the control point 108. For example, the controller 102 may cause the speaker 112 to emit speech, for example: "A new control point has been added. What would you like to name it?" The controller 102 may likewise prompt the user for other information, for example: "This new control point supports dimming. What dimming percentage would you like to use as the default?" In addition, the controller may ask the user 106 to supply authentication information, for example: "You are adding a new control point to your home automation system. Please speak your 5 digit pass code." Optionally, the controller 102 may perform a voice print analysis of audio input received via the transducer 110 to confirm the identity of the user 106 supplying the audio input.

The controller 102 may combine the addressing details for the control point 108 learned during the discovery process and the settings dictated by the user 106 to complete a new entry in the data store 104 for the control point. The controller may use the information gained during the discovery process, for example to infer which microphone received audio input during the process and therefore determine an approximate location of the control point 108. Such location information may be useful, for example, to disambiguate commands such as "turn on light" later.

The controller 102 may be coupled to a wide area network 118 via any suitable network interface. In addition, the controller may support remote access and control by a remote user via the WAN 118. For example, a user at a remote access node 120, such as a smart phone or other portable computing device, may connect to the controller 102 via a wireless communication system 116 and the WAN 118.

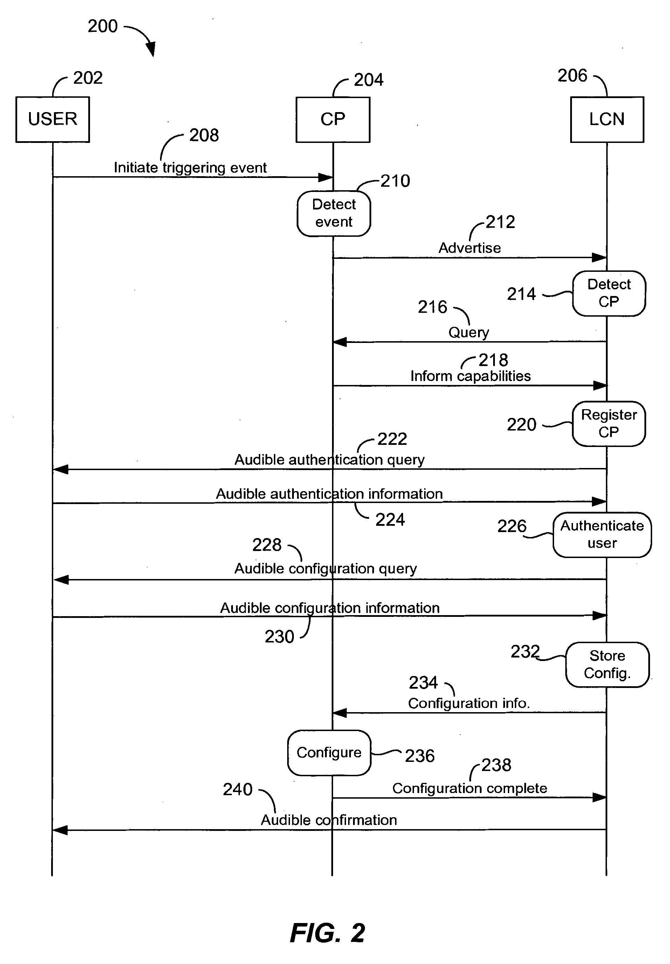

Another perspective of the foregoing embodiments is provided by the use case 200 illustrated in Fig. 2. It should be appreciated that the illustrated use case does not exclude other use cases for the foregoing system and apparatus. The illustrated use case 200 includes interactions between a user 202, control point 204, and local control node (system controller) 206.

At 208, the user initiates a triggering event, for example connecting a control point or appliance to the automation system network and powering up. At 210, the control point detects the triggering event, for example by applying a set of conditions to a change in its machine state, and detecting the event by satisfying all conditions. At 212, the control point advertises its presence to the local control node 206, for example using a discovery protocol as mentioned above. At 214, the local control node 206 receives the discovery advertisement and thereby detects the new control point.

At 216, the local control node may query the control point 204 concerning its control capabilities. At 218, the control point 204 may respond to the query by providing information detailing its control capabilities to the local control node 206. At 220, the local control node may use the capability information to create a registry entry for the control point 204 in a local automation database.

At 222, the local control node may direct an audible user authentication query to a speaker module or other audio output transducer located near the control point 204. The user 202 may respond by speaking a response including audible authentication information 224, which may be received by a microphone or the like near the control point. The local control node 226 may use the audible information to discern a pass code and/or a voice print matching a respective stored pass code or stored voice print for the user 202.

Then, at 228, the local control node 206 may similarly direct one or more audible configuration queries to the user 202. At 230, the user may respond to each configuration query by providing a requested control setting. The query/response process may be interactive, in that the user 202 may use voice commands to direct the topics to which control questions are asked. In the alternative, or in addition, the user 202 may supply verbal control setting input to the local control node 206 without waiting for a question. One of the options for a control setting may be to defer setting one or more control settings for a later time. The user may then log into the local control server 206 and make adjustment to the control settings, or add new settings, using a conventional graphical user interface, if desired. This may be more practical when adding appliances with complex control capabilities.

On receiving the control settings, the local control node may store the setting in the local control database, at 232. Optionally, the local control node may, at 234, provide the control setting or related control configuration information to the control point 204. At 236, if necessary the control point 204 may configure an internal control scheme in accordance with the control settings, in a local memory. At 238, the control point 204 may acknowledge that the configuration is complete to the local control node 206. Optionally, the local control node 206 may, at 240, provide an audible confirmation to user 202 that the control settings are received and the configuration of the control point 204 is complete.

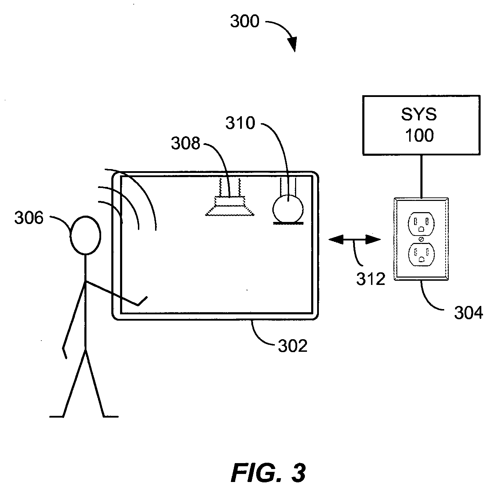

In other embodiments, as shown in Fig. 3, an automation system 300 including distributed control points may be set up using a mobile computing apparatus, for example, a smart phone or notepad computer. In such embodiments, the user 306 may purchase a control point 304 and obtain an application for configuring the control point that the user installs on the mobile computer 302. For example, the user may download the application from the Internet. The mobile computer 302 may include built in electroacoustic transducers, for example a speaker 308 and a microphone 310. The mobile computer 320 and the control point 304 may both include a wireless interface. Therefore, once the application is installed, the mobile computer 302 may establish a wireless link 312 to the control point 304 and/or to the controller (not shown) of the system 100.

In addition, one the application is installed on the mobile computer 302 and the control point 304 is powered on, the control point may advertise its presence and the mobile computer 302 may discover the control point. The control point 304 may be powered on by plugging into a power circuit (e.g., wall socket), or may be switched on by the user 306 and operate from an internal battery.

The user 306 may use the mobile device 302 to configure the control point 304. For example, the user may speak into the microphone 310 of the mobile device 302 in response to audio prompts generated by the application emanating from the speaker 308. The application may perform user authentication and obtain control settings for the control point from the user in a manner similar to the system controller of system 100. It may operate as a smart client that relays information to the system controller, or as a dumb client principally supplying the audible interface devices 308, 310 for use by the system controller, or some combination of the foregoing. In addition, the verbal data collection may be assisted by a complementary graphical user interface appearing on a display screen of the mobile device 302.

Optionally, the mobile device 302 may perform voice processing and determine the control settings, construct a message including the control settings according to any acceptable communications protocol, and transmit the message to the system 100 controller. In the alternative, the mobile device may simply relay raw audio data to the system controller. Either way, the system controller may obtain necessary control settings for controlling a newly added control point via an audio interface with the user 306. Functions of the mobile computer 302 may, in alternative embodiments, be integrated directly into the control point 304.

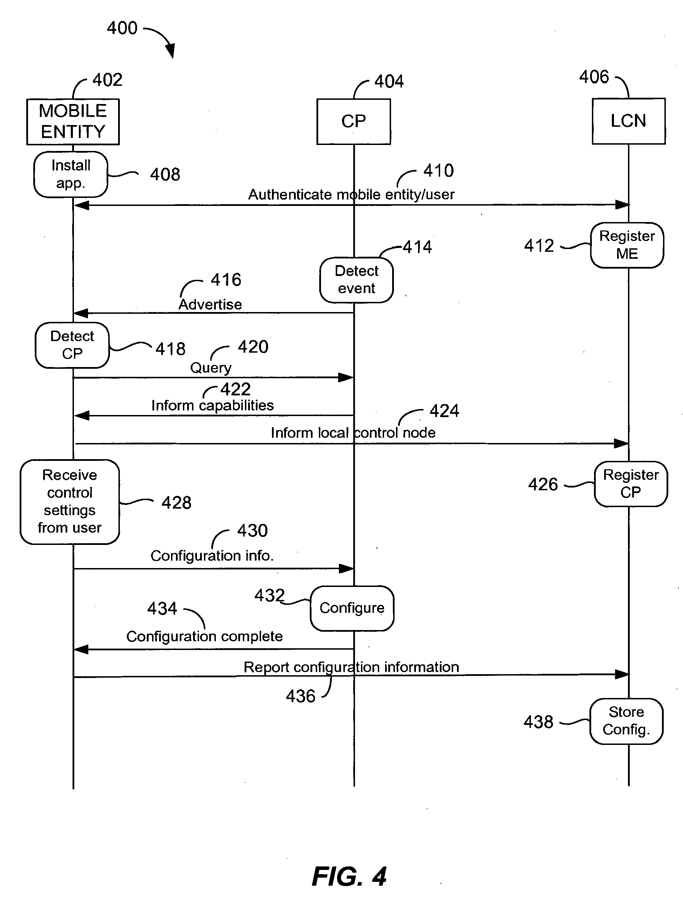

Another perspective of the foregoing embodiments using a mobile computing device is provided by the use case 400 illustrated in Fig. 4. It should be appreciated that the illustrated use case does not exclude other use cases for the foregoing system and apparatus. The illustrated use case 400 includes interactions between a mobile entity (computer) 202, control point 404, and local control node (system controller) 406.

At 408, a user may install an application for configuring the control point 404 on the mobile entity 402. At 410, the mobile entity and local control node 406 may engage in communications over a wireless interface to authenticate the mobile device 402 and user. This 410 may be triggered, for example, by activation of the application on the mobile device 402 while the device 402 is in range of a wireless transceiver connected to the local control node 406 for the wireless interface. At 412, assuming the mobile entity 402 and user can be authenticated by the information supplied by the mobile entity, the local control node 406 may register an identifier for the mobile entity in a data store.

At 414, the control point 414 may detect an event triggering an initial configuration process, for example, a power-on event in a context of not being registered or configured with any automation system, or detecting entry of a specific user request to configure the control point. In response to detecting the event, at 416, the control point 404 may advertise its presence using any suitable discovery protocol, for example, a wireless protocol recognized by the application running on the mobile entity 402. Such a wireless protocol may include, for example, WiFi Direct, Near Field Communication (NFC), Bluetooth Low Energy (BTLE), or audio. At 418, the mobile entity 402 may detect the discovery beacon or other signal from the control point 404. At 420, the mobile entity operating automatically under control of the application may query the control point 404 regarding its capabilities for control. At 422, the control point may provide information defining its control capabilities to the mobile entity 402 via the wireless link. The information may be provided directly from the control point, or indirectly via a remote database referenced by a model number or similar identifier for the control point. At 424, the mobile entity may relay the capability information to the local control node. At 426, the local control node may register the control point capability information in a database, based on the information received from the mobile entity 402.

After obtaining the capability information for the control point, the mobile entity may, at 428, receive control settings from the user via a verbal exchange, using the electroacoustic transducers as previously described. The mobile entity may process an audio signal from a microphone or other input transducer to obtain an analog or digital audio signal, which it may then process using a speech recognition algorithm to identify words spoken by the user. In some embodiments, the mobile entity may transmit text data from the speech recognition algorithm to the controller for further processing. In other embodiments, the mobile entity may perform further processing itself. This further processing may include, for example, using a decision tree or other logical structure based on a context in which words are recognized, the mobile entity or controller may infer one or more control settings based on the verbal input from the user. As previously noted, control settings may include a user name for the control point and a setting deferring configuration of one or more control settings for an indeterminate period. Control settings may also include one or more parameters for controlling the capabilities of the control point, for example, scheduling, power, motion, temperature, or other parameters.

At 430, the mobile entity may transmit the configuration information including any control settings, or text data from which the controller may determine the control settings, to the control point. At 432, the control point may configure itself in accordance with the control settings, for example by recording the settings in a local memory with variables of a control program set to appropriate values based on the control settings. In the alternative, or in addition, some control settings may be implemented at a system level, for example by the local control node 406. At 434, the control point 404 may report that its configuration is complete to the mobile entity 402.

At 436, the mobile entity may report the configuration information, including some or all of the control settings, to the local control node 406. To the extent that the local control node 406 will be controlling capabilities of the control point 404, or as a back-up for restoring the system in the event of a system failure, the local control node may store the control settings in a system database in association with the registry information for the control point.

Methodologies that may be implemented in accordance with the disclosed subject matter may be better appreciated with reference to various flow charts. For purposes of simplicity of explanation, methodologies are shown and described as a series of acts/operations. However, the claimed subject matter is not limited by the number or order of operations, as some operations may occur in different orders and/or at substantially the same time with other operations from what is depicted and described herein. Moreover, not all illustrated operations may be required to implement methodologies described herein. It is to be appreciated that functionality associated with operations may be implemented by software, hardware, a combination thereof or any other suitable means (e.g., device, system, process, or component). Additionally, it should be further appreciated that methodologies disclosed throughout this specification are capable of being stored as encoded instructions and/or data on an article of manufacture to facilitate transporting and transferring such methodologies to various devices. Those skilled in the art will understand and appreciate that a method could alternatively be represented as a series of interrelated states or events, such as in a state diagram.

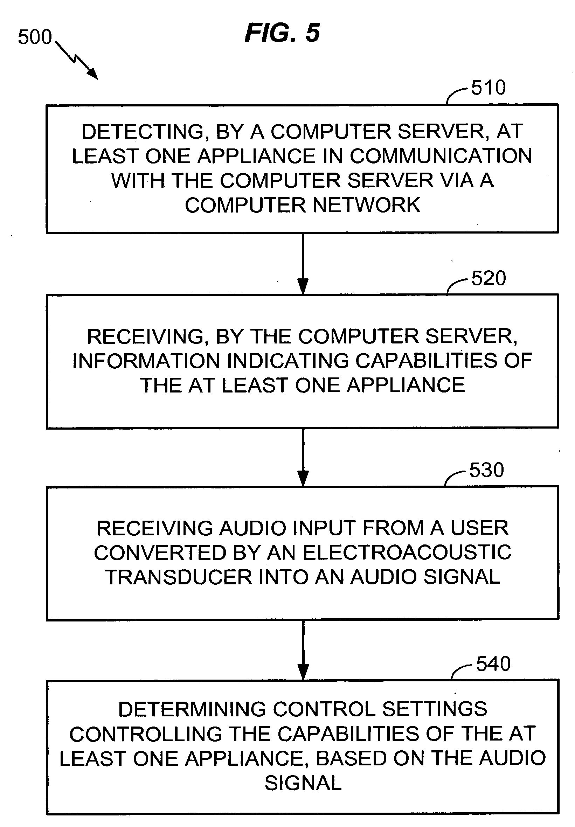

FIGS. 5-8 illustrate related methodologies for voice-controlled configuration of an automation system by a system controller, for example, a computer server operating an automation system over a Local Area Network (LAN) or other local network. Method 500 shown in FIG. 5 may include, at 510, detecting, by a computer server, at least one appliance in communication with the computer server via a computer network. The appliance may be newly added to the automation system. The appliance may be an electrical device that is powered on or off at times determined by the automation system, for example, a lamp, ventilation unit, heater, kitchen appliance, audio system, video camera, or other household appliance equipped with a controller and network interface; that is, a "smart" appliance. In the alternative, the appliance may be a "dumb" device coupled to a smart power-control unit. A smart appliance or an auxiliary, processor-controller power control unit for a dumb appliance may both be referred to herein as an appliance or control point. When the appliance is powered up, it may advertise its presence using a wireless or wired discover protocol, as described elsewhere herein. The server may receive the advertised signal and thereby detect that that the appliance is in communication with the computer server via the computer network.

The method 500 may further include, at 520, receiving, by the computer server (also referred to as a system controller), information indicating capabilities of the at least one appliance. For example, the information may indicate one or more operational states that can be controlled by the automation system. The number of states may vary depending on the complexity of the appliance and its control system. For example, a simple appliance such as a lamp may have only two control states, power on or power off. A more complex apparatus may have a much greater number of controllable states in addition to power on or off; for example, a motorized video camera system may also have capabilities such as pan left or right, pan up or down, zoom in or out, change frame rate or resolution, or other capabilities. The information indicating capabilities may define, according to a standard automation protocol, the various controllable states of the appliance.

The method 500 may further include, at 530, receiving audio input from a user converted by an electroacoustic transducer into an audio signal. For example, the computer server may receive a digital audio signal from an analog-to-digital converter, which, in turn, receives an analog audio signal from a microphone. The microphone may receive the audio input from the user, for example a user speaking answers in response to a series of audible questions generated by a user interface module of the system controller.

The method 500 may further include, at 540, determining control settings controlling the capabilities of the at least one appliance, based on the audio signal. For example, the control setting may determine times at which the appliance is powered on or off, or specify one or more operations to be performed by the appliance when it is powered on. The computer server may determine the control setting using a context-based analysis of voice data. For example, if the appliance is a lamp, an audible user interface may generate a series of questions and wait for a response after each question. The server may analyze the audio signal received after each question using a speech recognition algorithm, and infer a question response based on the results of the speech recognition and the questions. For example, in response a question such as "what time should the lamp be turned on?" the server may interpret a response such as "seven pee em" to mean 7 pm. In some cases, the user may wish to defer detailed control of the appliance for a later time or via a different interface. For example, for complex control schemes, a graphical user interface may provide a more efficient way to define control settings. In such cases, the control setting may be "defer setting" to another time to be determined by the user. The user still benefits, however, by conveniently adding the appliance to the network to be controlled at another time.

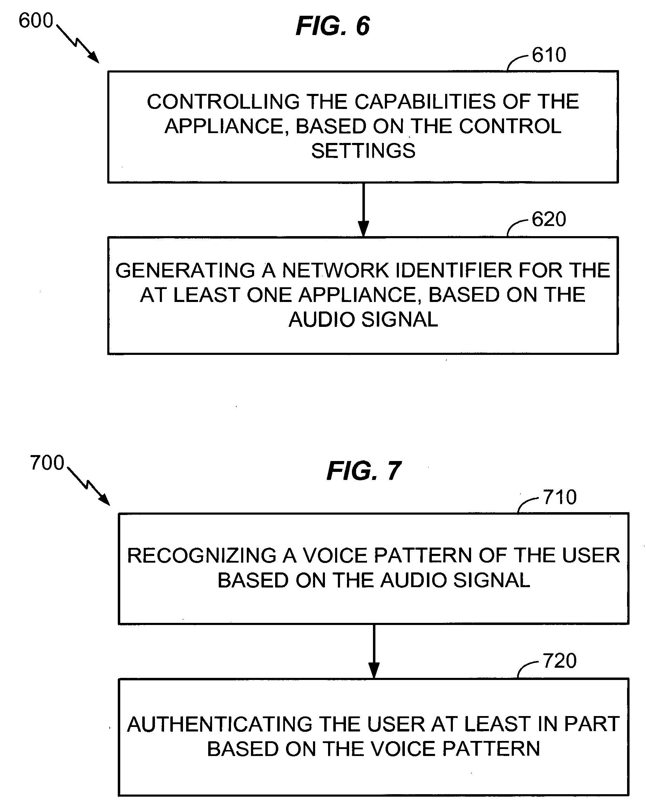

Additional operations 600, 700 and 800 for voice-controlled configuration of an automation system by a system controller are illustrated in FIGS. 7-8, for performance by the system controller. One or more of operations 600, 700 and 800 may optionally be performed as part of method 500. The operations 600, 700 and 800 may be performed in any operative order, or may be encompassed by a development algorithm without requiring a particular chronological order of performance. Operations may be independently performed and not mutually exclusive. Therefore any one of such operations may be performed regardless of whether another downstream or upstream operation is performed. For example, if the method 500 includes at least one of the operations 600, 700 and 800, then the method 500 may terminate after the at least one operation, without necessarily having to include any subsequent downstream operation(s) that may be illustrated.

Referring to FIG. 6, the additional operations 600 may include, at 610, the system controller controlling the capabilities of the appliance, based on the control settings. For example, the system controller may cause the appliance to be powered on or off at times designated by the control settings, by sending a command at the indicated time to the appliance via the computer network. The operations 600 may further include, at 620, generating a network identifier for the at least one appliance, based on the audio signal. For example, the controller may generate and output an audible question, asking the user to supply a name for the appliance that is connected to the automation system. The audio data received in response to the question may be analyzed using a speech-to-text algorithm to generate a textual name for the appliance, which can be used as a network identifier, or as part of an identifier. The name may be used to identify the appliance in a user interface, and coupled with a serial number or other unique identifier generated by the system controller for network addressing.

As shown in FIG. 7, additional operations 700 may include, at 710, recognizing a voice pattern of the user based on the audio signal. A voice pattern may include, for example, an algorithmic voice print as used for identifying a person's voice, for example, a spectrographic analysis. The additional operations 700 may further include, at 720, authenticating the user at least in part based on the voice pattern. For example, the controller may compare a voiceprint received in response to a question to a stored voiceprint for the identified user, and determine a level of confidence that the voice input is from the same person as the stored voiceprint. In addition, the system controller may use conventional authentication methods, such as passwords.

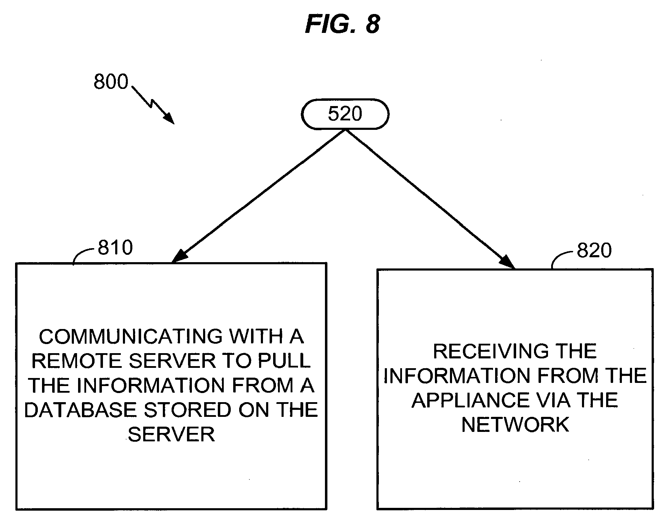

As shown in FIG. 8, additional operations 800 may include, according to a first alternative at 810, receiving information indicating capabilities of the at least one appliance (520) by communicating with a remote server to pull the information from a database stored on the server. For example, the appliance may advertise a model identifier to the system controller, which may use the model identifier to look up the appliance capabilities in a remote database. In a second alternative shown at 820, receiving the capability information 520 may include receiving the information directly from the appliance via the network. For example, the appliance may store the capability information in a local memory and transmit the information to the controller using a network protocol.

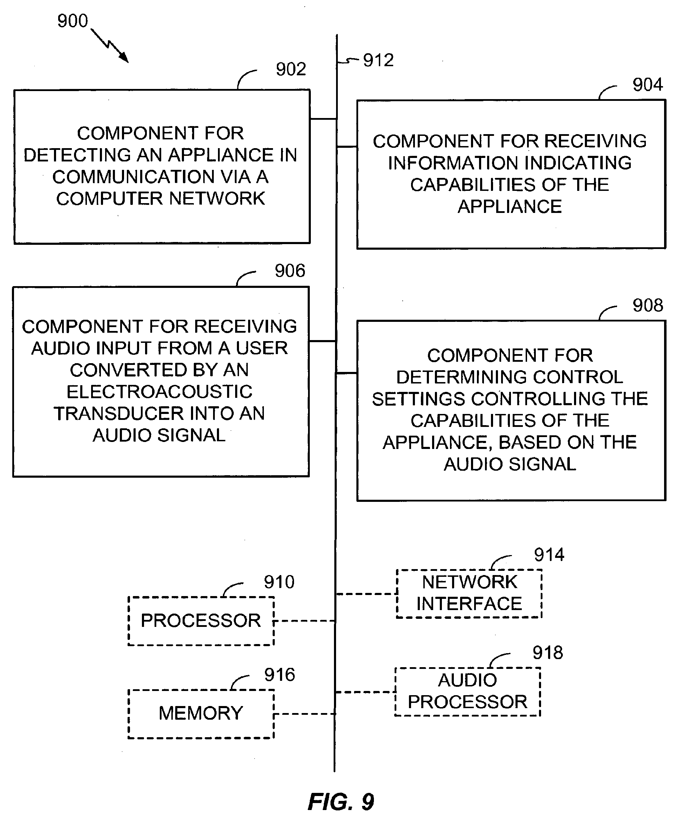

With reference to FIG. 9, there is provided an exemplary apparatus 900 that may be configured as a system controller in an automation system, or as a processor or similar device for use within the system controller, for voice-controlled configuration of an automation system. The apparatus 900 may include functional blocks that can represent functions implemented by a processor, software, or combination thereof (e.g., firmware).

As illustrated, in one embodiment, the apparatus 900 may include an electrical component or module 902 for detecting an appliance in communication via a computer network with the system controller. For example, the electrical component 902 may include at least one control processor coupled to a network interface or the like and to a memory with instructions for detecting an appliance advertising its presence on the network. The electrical component 902 may be, or may include, means for detecting an appliance in communication via a computer network. Said means may include an algorithm executed by one or more processors. The algorithm may include, for example, designating a port for receiving advertisements from appliances on a computer network, triggering an interrupt procedure when a signal is received via the designated port, and operating the interrupt procedure to process identification or addressing data received via the designated port.

The apparatus 900 may include an electrical component 904 for receiving information indicating capabilities of the appliance. For example, the electrical component 904 may include at least one control processor coupled to a memory holding instructions for receiving information indicating capabilities of the appliance. The electrical component 904 may be, or may include, means for receiving information indicating capabilities of the appliance. Said means may include an algorithm executed by one or more processors. The algorithm may include, for example, one or more of the algorithms 810 or 820 described above in connection with FIG. 8 .

The apparatus 900 may include an electrical component 906 for receiving audio input from a user converted by an electroacoustic transducer into an audio signal. For example, the electrical component 906 may include at least one control processor coupled to a memory holding instructions for audio input from a user converted by an electroacoustic transducer into an audio signal. The electrical component 906 may be, or may include, means for receiving audio input from a user converted by an electroacoustic transducer into an audio signal. Said means may include an algorithm executed by one or more processors. The algorithm may include, for example, receiving a file or streaming data using a packet data protocol (e.g., TCP/IP), reading header data to recognize data identified as audio data, and processing the data identified as data representing an audio signal according to a designated audio encoding protocol.

The apparatus 900 may include an electrical component 908 for determining control settings controlling the capabilities of the appliance, based on the audio signal. For example, the electrical component 908 may include at least one control processor coupled to a memory holding instructions for determining at least one control setting based on audio input from an authorized user. The at least one control setting may include a control for deferring detailed configuration of the appliance until a subsequent time or indefinitely. The electrical component 908 may be, or may include, means for determining control settings controlling the capabilities of the appliance, based on the audio signal. Said means may include an algorithm executed by one or more processors. The algorithm may include, for example, speech recognition of the audio signal, semantic analysis of recognized speech, and inferring the control setting based on the semantic analysis and context in which the speech is received. The apparatus 900 may include similar electrical components for performing any or all of the additional operations 600, 700 or 800 described in connection with FIGS. 6-7, which for illustrative simplicity are not shown in FIG. 9.

In related aspects, the apparatus 900 may optionally include a processor component 910 having at least one processor, in the case of the apparatus 900 configured as a system controller or computer server. The processor 910, in such case, may be in operative communication with the components 902-908 or similar components via a bus 912 or similar communication coupling. The processor 910 may effect initiation and scheduling of the processes or functions performed by electrical components 902-908.

In further related aspects, the apparatus 900 may include a network interface component 914 for communicating with other network entities, for example, an Ethernet port or wireless interface. The apparatus 900 may include an audio processor component 918, for example a speech recognition module, for processing the audio signal to recognize user-specified control settings. The apparatus 900 may optionally include a component for storing information, such as, for example, a memory device/component 916. The computer readable medium or the memory component 916 may be operatively coupled to the other components of the apparatus 900 via the bus 912 or the like. The memory component 916 may be adapted to store computer readable instructions and data for performing the activity of the components 902-908, and subcomponents thereof, or the processor 910, the additional operations 850 or 860, or the methods disclosed herein. The memory component 916 may retain instructions for executing functions associated with the components 902-908. While shown as being external to the memory 916, it is to be understood that the components 902-908 can exist within the memory 916.

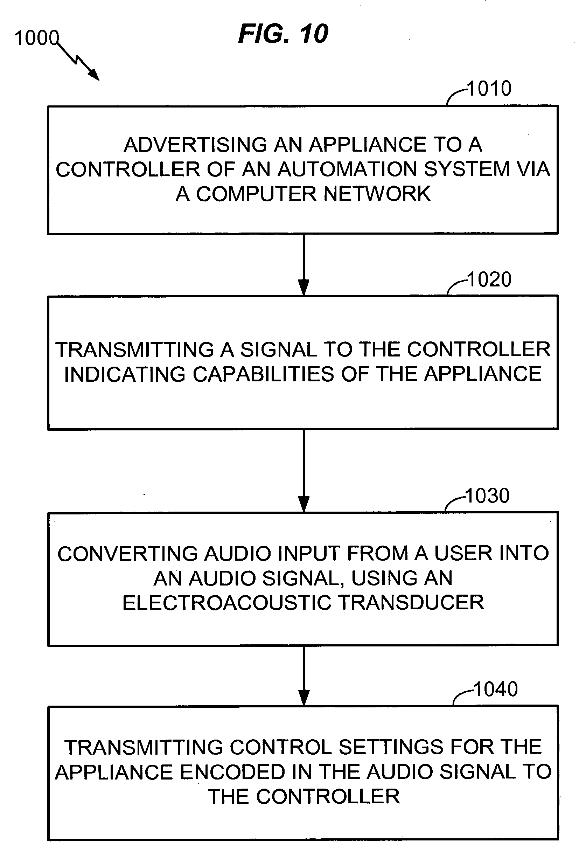

A client device, for example a mobile entity, control point or smart appliance, may cooperate with a system controller for voice-controlled configuration of an automation system. Accordingly, FIG. 10 illustrates a method 1000 that may be performed by a client device of an automation system, for voice-controlled configuration of an automation system. The method 1000 may include, at 1010, advertising an appliance to a controller of an automation system via a computer network. As noted above, the appliance or a connected control point may, in response to occurrence of a defined event, advertise (e.g., broadcast) its presence over a wired or wireless interface, using any suitable advertisement protocol. Method 1000 may further include, at 1020, transmitting a signal to the controller indicating capabilities of the appliance. For example, once the controller has recognized the appliance and established a connection via a handshake or other protocol, the appliance or control point may provide information defining the capabilities of the appliance, or information for locating a list of appliance capabilities, to the controller. As noted above, capabilities refer to operational states of the appliance that are controllable in an automation system, for example, power on or off. Further examples of capabilities are provided herein above.

Method 1000 may further include, at 1030, converting audio input from a user into an audio signal, using an electroacoustic transducer. For example, a microphone in the appliance, control point, auxiliary mobile interface (e.g., smart phone), or stationary microphone coupled to the controller may receive spoken input from a user, which is converted to an analog audio signal and subsequently into a digital audio signal for processing using a speech recognition algorithm. The operation 1030 may be preceded by audio output from an electroacoustic transducer, such as a speaker. The audio output may be configured, for example, as speech phrasing a question to be answered by the user. Questions may include, for example, "what is this appliance's name?" or "please provide a name for this appliance." Other examples are provided herein above.

The method 1000 may further include, at 1040, transmitting control settings for the appliance encoded in the audio signal to the controller. For example, the appliance, a connected control point, or an auxiliary mobile interface device, may relay the analog or digital audio signal, or text data from a speech recognition algorithm, to the system controller for further processing. In the alternative, the appliance, a connected control point, or an auxiliary mobile interface may process the audio signal to determine the control settings, using a speech recognition/semantic analysis algorithm. Subsequently, the appliance may be controlled by the controller based on the control settings. In addition, the user may access and modify the control settings, or add additional control settings, either through the same audio interface as used for initial set-up, or using a more traditional graphical user interface.

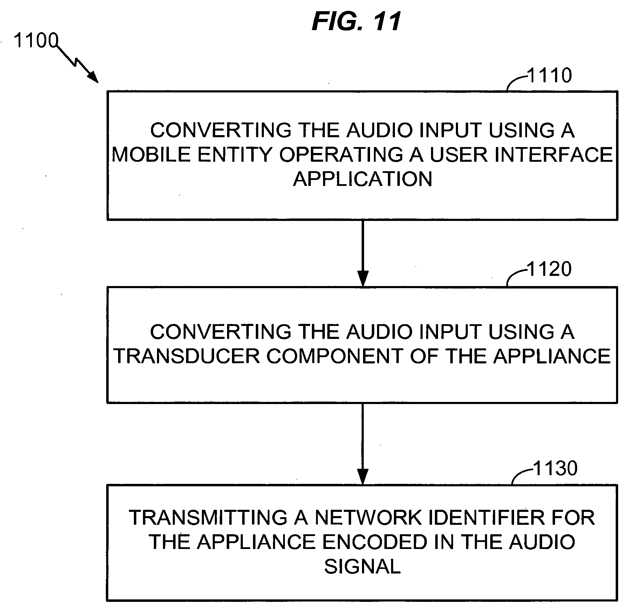

In addition, FIGS. 11-12 show optional operations 1100-1200 that may be implemented for use by the client device in voice-controlled configuration of an automation system. The elements 1050 may be performed in any operative order, or may be encompassed by a development algorithm without requiring a particular chronological order of performance. Operations are independently performed and not mutually exclusive. Therefore any one of such operations may be performed regardless of whether another downstream or upstream operation is performed. For example, if the method 1000 includes at least one operation of FIGS. 11-12, then the method 1000 may terminate after the at least one operation, without necessarily having to include any subsequent downstream operation(s) that may be illustrated.

Referring to FIG. 11, the additional operations 1100 may include, at 1110, performing the converting the audio input using a mobile entity operating a user interface application. For example, a smart phone or notepad device may operate a configuration application that links wirelessly to the appliance or connection point, such as by a Wi-Fi or Bluetooth wireless link. The smart phone or other mobile computing device may include a microphone and speaker for operating a data query/collection process over an audible interface, in coordination with the appliance/control point. This may be supplemented by a graphical user interface appearing on the mobile device display.

The additional elements 1100 may further include, at 1120, performing the converting the audio input using a transducer component of the appliance. For example, a microphone may be built into the appliance, a connected control point, or an auxiliary mobile interface device. In the alternative, the microphone or other transducer may be a component of the automation system to which the appliance is being connected. The additional elements 1100 may further include, at 1130, transmitting a network identifier for the appliance encoded in the audio signal. For example, the audio signal may include speech recorded in response to a statement such as "please provide a name for the appliance you are connecting."

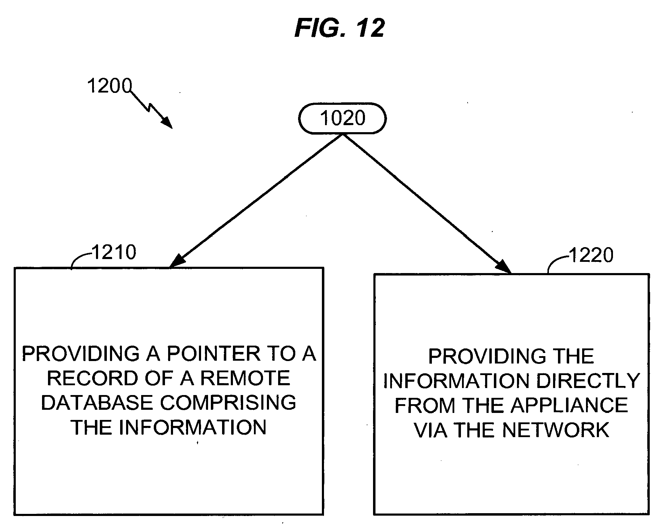

As noted above, the client device may transmit a signal to the controller indicating capabilities of the appliance (1020) in various ways. Accordingly, referring to FIG. 12, the additional operations 1200 may include, at 1210, providing a pointer to a record of a remote database comprising the information. In the alternative, the additional elements 1200 may further include, at 1220, providing the information directly from the appliance via the network.

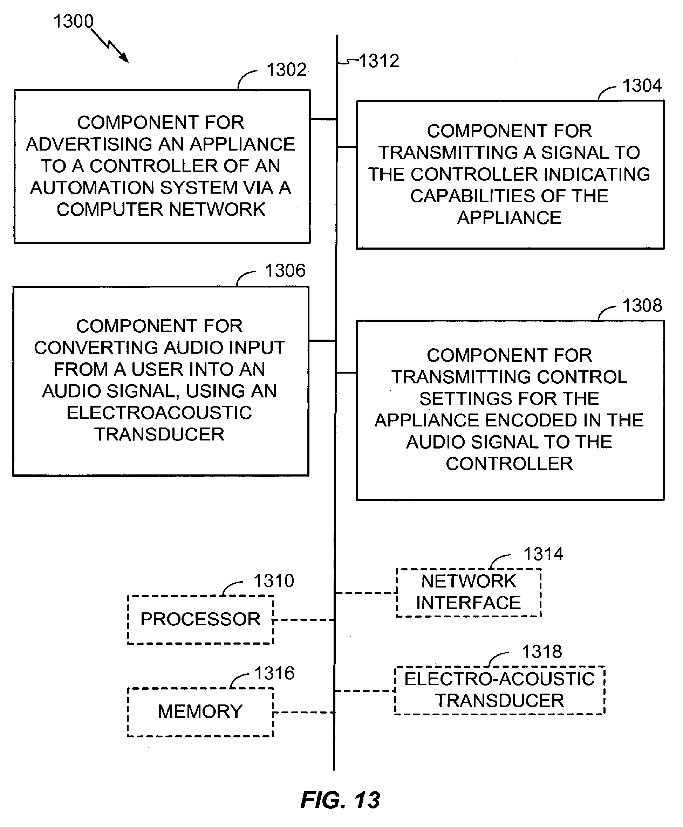

With reference to FIG. 13, there is provided an exemplary apparatus 1300 that may be configured as a smart appliance, smart mobile device (e.g., smart phone or notepad computer) or control point, or as a processor or similar device for use within the these devices, for voice-controlled configuration of an automation system. The apparatus 1300 may include functional blocks that can represent functions implemented by a processor, software, or combination thereof (e.g., firmware).

As illustrated, in one embodiment, the apparatus 1300 may include an electrical component or module 1302 for advertising an appliance to a controller of an automation system via a computer network. For example, the electrical component 1302 may include at least one control processor coupled to a network interface or the like and to a memory with instructions for advertising the appliance using a selected discovery protocol for the computer network. The electrical component 1302 may be, or may include, means for advertising an appliance to a controller of an automation system via a computer network. Said means may include an algorithm executed by one or more processors. The algorithm may include, for example, advertising a network entity using a discovery protocol such as, for example, Bonjour or WiFi Direct.

As illustrated, in one embodiment, the apparatus 1300 may include an electrical component or module 1304 for transmitting a signal to the controller indicating capabilities of the appliance. For example, the electrical component 1304 may include at least one control processor coupled to a network interface or the like and to a memory with instructions for generating the signal indicating capabilities of the appliance according to a defined protocol, and transmitting the signal to the controller using the computer network. The electrical component 1304 may be, or may include, means for transmitting a signal to the controller indicating capabilities of the appliance. Said means may include an algorithm executed by one or more processors. The algorithm may include, for example, providing information defining the capabilities of the appliance directly to the controller, or in the alternative, information for locating a list of appliance capabilities in a designated data store (e.g., providing a model identifier for the appliance). In either case, the algorithm may include providing the information according to a predefined communications protocol for the system controller over the network.

As illustrated, in one embodiment, the apparatus 1300 may include an electrical component or module 1306 for converting audio input from a user into an audio signal, using an electroacoustic transducer. For example, the electrical component 1306 may include at least one control processor coupled to a microphone or the like and to a memory with instructions for converting an analog audio signal into a digital signal. The electrical component 1306 may be, or may include, means for converting audio input from a user into an audio signal, using an electroacoustic transducer. Said means may include an algorithm executed by one or more processors. The algorithm may include, for example, activating a microphone in response to an audible query, collecting an analog audio signal from the microphone, and converting the analog signal to digital audio data.

As illustrated, in one embodiment, the apparatus 1300 may include an electrical component or module 1308 for transmitting control settings for the appliance encoded in the audio signal to the controller. For example, the electrical component 1308 may include at least one control processor coupled to a network interface or the like and to a memory with instructions for transmitting digital or analog audio data to the automation system controller. The electrical component 1308 may be, or may include, means for transmitting control settings for the appliance encoded in the audio signal to the controller. Said means may include an algorithm executed by one or more processors. The algorithm may include, for example, identifying a subset of audio data for transmitting to the controller, and transmitting digital or analog audio data to the automation system controller using a wireless or wired communications protocol for the automation system.

The apparatus 1300 may include similar electrical components for performing any or all of the additional operations 1100 or 1200 described in connection with FIGS. 11-12, which for illustrative simplicity are not shown in FIG. 13.

In related aspects, the apparatus 1300 may optionally include a processor component 1310 having at least one processor, in the case of the apparatus 1300 configured as a client entity. The processor 1310, in such case, may be in operative communication with the components 1302-1308 or similar components via a bus 1312 or similar communication coupling. The processor 1310 may effect initiation and scheduling of the processes or functions performed by electrical components 1302-1308.

In further related aspects, the apparatus 1300 may include a network interface component 1314 and or a transceiver (not shown). The apparatus 1300 may further include an electroacoustic transducer 1318, for example, a microphone and/or speaker. The apparatus 1300 may optionally include a component for storing information, such as, for example, a memory device/component 1316. The computer readable medium or the memory component 1316 may be operatively coupled to the other components of the apparatus 1300 via the bus 1312 or the like. The memory component 1316 may be adapted to store computer readable instructions and data for performing the activity of the components 1302-1308, and subcomponents thereof, or the processor 1310, the additional aspects 1100-1200, or the methods disclosed herein for a client device. The memory component 1316 may retain instructions for executing functions associated with the components 1302-1308. While shown as being external to the memory 1316, it is to be understood that the components 1302-1308 can exist within the memory 1316.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and non-transitory communication media that facilitates transfer of a computer program from one place to another. A storage media may be any available media that can be accessed by a general purpose or special purpose computer. By way of example, and not limitation, such storage (non-transitory) computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection may be properly termed a computer-readable medium to the extent involving non-transitory storage of transmitted signals. Disk and disc, as used herein, includes compact disc (CD), laser disc, optical disc, digital versatile disc (DVD), floppy disk and Blu-ray disc where disks usually encode data magnetically, while discs hold data encoded optically. Combinations of the above should also be included within the scope of computer-readable media.

## Claims

1. A method, comprising:
detecting, by a computer server, an appliance in communication with the computer server via a computer network;
receiving, by the computer server, information indicating capabilities of the appliance;
receiving audio input from a user converted by an electroacoustic transducer into an audio signal; and
determining control settings controlling the capabilities of the appliance, based on the audio signal,
wherein the control settings comprise at least one of:
a schedule corresponding to one or more times at which the appliance is to power on or off;
a setting deferring configuration of the appliance to a later time; or
one or more operations to be performed by the appliance when it is powered on.

2. The method of claim 1, further comprising controlling the capabilities of the appliance, based on the control settings.

3. The method of claim 1, further comprising generating a network identifier for the at least one appliance, based on the audio signal.

4. The method of claim 1, further comprising recognizing a voice pattern of the user based on the audio signal, and authenticating the user at least in part based on the voice pattern.

5. The method of claim 1, wherein receiving the information indicating the capabilities comprises at least one of: (a) communicating with a remote server to pull the information from a database stored on the server, or (b) receiving the information from the appliance via the network.

6. The method of claim 1, wherein the computer server comprises a centralized controller for a home automation system.

7. The method of claim 1, wherein the computer server comprises one of a plurality of distributed controllers for a home automation system.

8. An apparatus, comprising:
means for detecting an appliance in communication via a computer network;
means for receiving information indicating capabilities of the appliance;
means for receiving audio input from a user converted by an electroacoustic transducer into an audio signal; and
means for determining control settings controlling the capabilities of the appliance, based on the audio signal,
wherein the control settings comprise at least one of:
a schedule corresponding to one or more times at which the appliance is to power on or off;
a setting deferring configuration of the appliance to a later time; or
one or more operations to be performed by the appliance when it is powered on.

9. A method comprising:
advertising an appliance to a controller of an automation system via a computer network;
transmitting a signal to the controller indicating capabilities of the appliance;
converting audio input from a user into an audio signal, using an electroacoustic transducer; and
transmitting control settings for the appliance encoded in the audio signal to the controller,
wherein the control settings comprise at least one of:
a schedule corresponding to one or more times at which the appliance is to power on or off;
a setting deferring configuration of the appliance to a later time; or
one or more operations to be performed by the appliance when it is powered on.

10. The method of claim 9, further comprising performing the converting the audio input using a mobile entity operating a user interface application.

11. The method of claim 9, further comprising performing the converting the audio input using a transducer component of the appliance.

12. The method of claim 9, further comprising transmitting a network identifier for the appliance encoded in the audio signal.

13. The method of claim 1, wherein transmitting the signal to the controller indicating capabilities of the appliance comprises at least one of: (a) providing a pointer to a record of a remote database comprising the information, or (b) providing the information directly from the appliance via the network.

14. A computer program product, comprising:
a computer-readable medium comprising code for causing a computer to carry out the steps of any of claims 1 to 7 or 9 to 13.

15. An apparatus for installing at least one appliance with a home automation system comprising a controller, the apparatus comprising:
means for advertising an appliance to a controller of an automation system via a computer network;
means for transmitting a signal to the controller indicating capabilities of the appliance
means for converting audio input from a user into an audio signal, using an electroacoustic transducer; and
means for transmitting control settings for the appliance encoded in the audio signal to the controller,
wherein the control settings comprise at least one of:
a schedule corresponding to one or more times at which the appliance is to power on or off;
a setting deferring configuration of the appliance to a later time; or
one or more operations to be performed by the appliance when it is powered on.

## Patentansprüche

1. Ein Verfahren, das Folgendes aufweist:
Detektieren, durch einen Computerserver, eines Geräts bzw. einer Einrichtung, die mit dem Computerserver über ein Computernetzwerk in Kommunikation steht;
Empfangen, durch den Computerserver, von Information, die Fähigkeiten der Einrichtung anzeigt;
Empfangen einer Audioeingabe von einem Nutzer, die durch einen elektroakustischen Transducer bzw. Wandler in ein Audiosignal umgewandelt wurde; und
Bestimmen von Steuereinstellungen, die die Fähigkeiten der Einrichtung steuern, basierend auf dem Audiosignal,
wobei die Steuereinstellungen wenigstens eines von Folgendem aufweisen:
einen Ablaufplan, der einer oder mehreren Zeiten entspricht, zu denen die Einrichtung an- oder abgeschaltet werden soll;
eine Einstellungsverschiebungskonfiguration der Einrichtung auf einen späteren Zeitpunkt; oder
einen oder mehrere Vorgänge, die durch die Einrichtung durchgeführt werden sollen, wenn sie angeschaltet wird.

2. Verfahren nach Anspruch 1, das weiter Steuern der Fähigkeiten der Einrichtung basierend auf den Steuereinstellungen aufweist.

3. Verfahren nach Anspruch 1, das weiter Generieren eines Netzwerkidentifikators für die wenigstens eine Einrichtung basierend auf dem Audiosignal aufweist.

4. Verfahren nach Anspruch 1, das weiter Erkennen eines Stimm- bzw. Sprachmusters des Nutzers basierend auf dem Audiosignal, und Authentifizieren des Nutzers zumindest teilweise basierend auf dem Stimmmuster aufweist.

5. Verfahren nach Anspruch 1, wobei das Empfangen der Information, die die Fähigkeiten anzeigt, wenigstens eines von Folgendem aufweist: (a) Kommunizieren mit einem entfernten Server bzw. Fernserver, um Information von einer Datenbank abzurufen, die auf dem Server gespeichert ist, oder (b) Empfangen der Information von der Einrichtung über das Netzwerk.

6. Verfahren nach Anspruch 1, wobei der Computerserver eine zentralisierte Steuervorrichtung für ein Home-Automation- bzw. Heimautomationssystem aufweist.

7. Verfahren nach Anspruch 1, wobei der Computerserver eine einer Vielzahl von verteilten Steuervorrichtungen für ein Heimautomationssystem aufweist.

8. Eine Vorrichtung, die Folgendes aufweist:
Mittel zum Detektieren eines Geräts bzw. einer Einrichtung, die über ein Computernetzwerk in Kommunikation steht;
Mittel zum Empfangen von Information, die Fähigkeiten der Einrichtung anzeigt;
Mittel zum Empfangen einer Audioeingabe von einem Nutzer, die durch einen elektroakustischen Transducer bzw. Wandler in ein Audiosignal umgewandelt wurde; und
Mittel zum Bestimmen von Steuereinstellungen, die die Fähigkeiten der Einrichtung steuern, basierend auf dem Audiosignal,
wobei die Steuereinstellungen wenigstens eines von Folgendem aufweisen:
einen Ablaufplan, der einer oder mehreren Zeiten entspricht, zu denen die Einrichtung an- oder abgeschaltet werden soll;
eine Einstellungsverschiebungskonfiguration der Einrichtung auf einen späteren Zeitpunkt; oder
einen oder mehrere Vorgänge, die durch die Einrichtung durchgeführt werden sollen, wenn sie angeschaltet wird.

9. Ein Verfahren, das Folgendes aufweist:
Anzeigen bzw. Bekanntgeben einer Einrichtung bzw. eines Geräts gegenüber einer Steuervorrichtung eines Automationssystems über ein Computernetzwerk;
Senden eines Signals an die Steuervorrichtung, das Fähigkeiten der Einrichtung anzeigt;
Wandeln einer Audioeingabe von einem Nutzer in ein Audiosignal unter Verwendung eines elektroakustischen Wandlers; und
Senden von Steuereinstellungen für die Einrichtung, die in das Audiosignal codiert sind, an die Steuervorrichtung,
wobei die Steuereinstellungen wenigstens eines von Folgendem aufweisen:
einen Ablaufplan entsprechend einer oder mehreren Zeiten, zu denen die Anwendung an- oder ausgeschaltet werden soll;
eine Einstellungsverschiebungskonfiguration der Einrichtung auf einen späteren Zeitpunkt; oder
einen oder mehrere Vorgänge, die durch die Anwendung durchgeführt werden sollen, wenn sie angeschaltet wird.

10. Verfahren nach Anspruch 9, das weiter Durchführen der Wandlung der Audioeingabe unter Verwendung einer Mobileinheit aufweist, die eine Nutzerschnittstellenanwendung betreibt.

11. Verfahren nach Anspruch 9, das weiter Durchführen der Wandlung der Audioeingabe unter Verwendung einer Wandlerkomponente der Einrichtung aufweist.

12. Verfahren nach Anspruch 9, das weiter Senden eines Netzwerkidentifikators für die Einrichtung, codiert in das Audiosignal, aufweist.

13. Verfahren nach Anspruch 1, wobei das Senden des Signals an die Steuervorrichtung, das Fähigkeiten der Einrichtung anzeigt, wenigstens eines von Folgendem aufweist: (a) Vorsehen eines Zeigers bzw. Adressenverweises auf einen Eintrag einer entfernten Datenbank bzw. Ferndatenbank, die die Information aufweist, oder (b) Vorsehen der Information direkt von der Einrichtung über das Netzwerk.

14. Ein Computerprogrammprodukt, das Folgendes aufweist:
ein computerlesbares Medium, das Code aufweist, um einen Computer zu veranlassen, die Schritte nach einem der Ansprüche 1 bis 7 oder 9 bis 13 auszuführen.

15. Eine Vorrichtung zum Installieren wenigstens einer Einrichtung bzw. eines Geräts in einem Heimautomationssystem, das eine Steuervorrichtung aufweist, wobei die Vorrichtung Folgendes aufweist:
Mittel zum Anzeigen bzw. Bekanntgeben einer Einrichtung gegenüber einer Steuervorrichtung eines Automationssystems über ein Computernetzwerk;
Mittel zum Senden eines Signals an die Steuervorrichtung, das Fähigkeiten der Einrichtung anzeigt;
Mittel zum Wandeln einer Audioeingabe von einem Nutzer in ein Audiosignal unter Verwendung eines elektroakustischen Wandlers; und
Mittel zum Senden von Steuereinstellungen für die Einrichtung, die in das Audiosignal codiert sind, an die Steuervorrichtung,
wobei die Steuereinstellungen wenigstens eines von Folgendem aufweisen:
einen Ablaufplan entsprechend einer oder mehreren Zeiten, zu denen die Anwendung an -oder ausgeschaltet werden soll;
eine Einstellungsverschiebungskonfiguration der Einrichtung auf einen späteren Zeitpunkt; oder
einen oder mehrere Vorgänge, die durch die Anwendung durchgeführt werden sollen, wenn sie angeschaltet wird.

## Revendications

1. Procédé comprenant :
détecter, par à un serveur informatique, un appareil en communication avec le serveur informatique par l'intermédiaire d'un réseau informatique ;
recevoir, par le serveur informatique, des informations indiquant des capacités de l'appareil ;
recevoir une entrée audio à partir d'un utilisateur, convertie par un transducteur électroacoustique en un signal audio ; et
déterminer des paramètres de commande contrôlant les capacités de l'appareil, sur la base du signal audio,
dans lequel les paramètres de commande comprennent au moins un élément parmi :
une planification correspondant à une ou plusieurs fois où l'appareil est mis en marche ou à l'arrêt ;
un paramètre reportant la configuration de l'appareil à un moment ultérieur ; ou
une ou plusieurs opérations à réaliser par l'appareil lorsqu'il est mis en marche.

2. Procédé selon la revendication 1, comprenant en outre une contrôle des capacités de l'appareil, sur la base des paramètres de commande.

3. Procédé selon la revendication 1, comprenant en outre la génération d'un identifiant réseau pour ledit au moins un appareil, sur la base du signal audio.

4. Procédé selon la revendication 1, comprenant en outre la reconnaissance d'un motif vocal de l'utilisateur sur la base du signal audio, et une authentification de l'utilisateur au moins en partie sur la base du motif vocal.

5. Procédé selon la revendication 1, dans lequel la réception des informations indiquant les capacités comprend au moins un élément parmi : (a) une communication avec un serveur distant pour tirer les informations à partir d'une base de données mémorisée sur le serveur, ou (b) la réception des informations à partir de l'appareil par l'intermédiaire du réseau.

6. Procédé selon la revendication 1, dans lequel le serveur informatique comprend un contrôleur centralisé pour un système d'automatisation domestique.

7. Procédé selon la revendication 1, dans lequel le serveur informatique comprend l'un d'une pluralité de contrôleurs répartis pour un système d'automatisation domestique.

8. Dispositif comprenant :
des moyens pour détecter un appareil en communication par l'intermédiaire d'un réseau informatique ;
des moyens pour recevoir des informations indiquant des capacités de l'appareil ;
des moyens pour recevoir une entrée audio à partir d'un utilisateur, convertie par un transducteur électroacoustique en un signal audio ; et
des moyens pour déterminer des paramètres de commande contrôlant les capacités de l'appareil, sur la base du signal audio,
dans lequel les paramètres de commande comprennent au moins un élément parmi :
une planification correspondant à une ou plusieurs fois où l'appareil est mis en marche ou à l'arrêt ;
un paramètre reportant la configuration de l'appareil à un moment ultérieur ; ou
une ou plusieurs opérations à réaliser par l'appareil lorsqu'il est mis en marche.

9. Procédé comprenant :
annoncer un appareil à un contrôleur d'un système d'automatisation par l'intermédiaire d'un réseau informatique ;
émettre un signal vers le contrôleur indiquant des capacités de l'appareil ;
convertir une entrée audio provenant d'un utilisateur en un signal audio, en utilisant un transducteur électro-acoustique ; et
transmettre au contrôleur des paramètres de commande pour l'appareil, codés dans le signal audio,
dans lequel les paramètres de commande comprennent au moins un élément parmi :
une planification correspondant à une ou plusieurs fois où l'appareil est mis en marche ou à l'arrêt ;
un paramètre reportant la configuration de l'appareil à un temps ultérieur ; ou
une ou plusieurs opérations à réaliser par l'appareil lorsqu'il est mis en marche.

10. Procédé selon la revendication 9, comprenant en outre la réalisation de la conversion de l'entrée audio en utilisant une entité mobile actionnant une application d'interface utilisateur.

11. Procédé selon la revendication 9, comprenant en outre la réalisation de la conversion de l'entrée audio en utilisant un composant transducteur de l'appareil.

12. Procédé selon la revendication 9, comprenant en outre l'émission d'un identifiant réseau pour l'appareil, codé dans le signal audio.

13. Procédé selon la revendication 1, dans lequel l'émission du signal indiquant des capacités de l'appareil vers le contrôleur comprend au moins l'un des éléments suivants : (a) fournir un pointeur vers un enregistrement d'une base de données distante comprenant les informations, ou (b) fournir les informations directement à partir de l'appareil par l'intermédiaire du réseau.

14. Produit programme d'ordinateur comprenant :
un support lisible par un ordinateur comprenant du code pour amener un ordinateur à réaliser les étapes de l'une quelconque des revendications 1 à 7 ou 9 à 13.

15. Dispositif pour installer au moins un appareil avec un système d'automatisation domestique comprenant un contrôleur, le dispositif comprenant :
des moyens pour annoncer un appareil à un contrôleur d'un système d'automatisation par l'intermédiaire d'un réseau informatique ;
des moyens pour émettre un signal vers le contrôleur indiquant des capacités de l'appareil ;
des moyens pour convertir une entrée audio provenant d'un utilisateur en un signal audio, en utilisant un transducteur électroacoustique ; et
des moyens pour transmettre au contrôleur des paramètres de commande pour l'appareil, codés dans le signal audio,
dans lequel les paramètres de commande comprennent au moins un élément parmi :
une planification correspondant à une ou plusieurs fois où l'appareil est mis en marche ou à l'arrêt ;
un paramètre reportant la configuration de l'appareil à un temps ultérieur ; ou
une ou plusieurs opérations à réaliser par l'appareil lorsqu'il est mis en marche.
